**Europäisches Patentamt**

**European Patent Office**

**Office européen des brevets**

(11) Veröffentlichungsnummer: **0 080 069**
A2

# EUROPÄISCHE PATENTANMELDUNG

(21) Anmeldenummer: 82109920.7

(22) Anmeldetag: 27.10.82

(51) Int. Cl.³: **A 24 C 5/34**, G 01 N 21/88

(30) Priorität: 24.11.81 DE 3146507

(43) Veröffentlichungstag der Anmeldung: 01.06.83
Patentblatt 83/22

(84) Benannte Vertragsstaaten: **BE DE FR GB IT NL SE**

(71) Anmelder: **Maschinenfabrik Alfred Schmermund,
Brüggerfelder Strasse 16-18 Postfach 2060,
D-5820 Gevelsberg (DE)**

(72) Erfinder: **Lang, Günter, Ing. grad., Berchemallee 125,
D-5820 Gevelsberg (DE)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

(54) Vorrichtung zum Prüfen des Füllungsgrades von Zigarettenenden.

(57) Die Erfindung betrifft eine Vorrichtung zum Prüfen des Füllungsgrades von Zigarettenenden, die einzeln oder blockweise geprüft werden. Entsprechende Reflexions-lichtschranken (11) dienen dazu, die Zigarettenenden zu bestrahlen und das hiervon reflektierte Licht zu empfangen, um ein Signal entsprechend dem Füllungsgrad zu erzeugen, das mit einem Schnellwert verglichen wird, um Ausschuß auszusortieren. Um mit minimalem Aufwand auszukommen und Verfälschungen des Ergebnisses aufgrund schwankenden Abstandes zwischen Lichtempfänger und Zigarettenende auszuschalten, ist vor den Reflexionslicht-schranken (11) eine lichtdurchlässige Platte (12) angeordnet, deren Außenseite so angeordnet ist, daß die zu prüfenden Zigarettenenden bei Anlage an der Platte (12) sich in einem Abstand im Bereich des abfallenden Teils ($K_{ab}$) der Kurve (K) der Beleuchtungsstärke des reflektierten Lichts aufgetragen gegenüber dem Abstand (d) des Zigarettenendes von dem Lichtempfänger befindet. Hierbei können einfachste Reflexionslichtschranken (11) bestehend aus einer Leuchtdiode und einem Fototransistor verwendet werden.

Maschinenfabrik Alfred Schmermund GmbH & Co., 582o Gevelsberg

Vorrichtung zum Prüfen des Füllungsgrades von Zigarettenenden

Die Erfindung betrifft eine Vorrichtung zum Prüfen des Füllungsgrades von Zigarettenenden gemäß dem Oberbegriff des Anspruchs 1.

Eine derartige Vorrichtung ist aus der DE-OS 28 13 866 bekannt, bei der die Lichtaustritts- und-eintrittsfläche von Lichtsender bzw. empfänger queraxial zur Zigarettenachse und durch eine neutrale Zone voneinander getrennt angeordnet sind und gemeinsam innerhalb der Stirnfläche einer Faseroptikplatte liegen, an die das zu prüfende Zigarettenende zur Anlage gebracht wird. Hierbei gelangt das Licht durch Vielfachreflexion im Bereich des Zigarettenendes vom Lichtsender zum-empfänger, wodurch die Lichtintensität stark reduziert wird. Je schwächer das empfangene Signal ist, desto mehr Tabakfasern sind vorhanden. Wird ein voreingestellter Schwellwert für die Lichtintensität überschritten, so gilt die betreffende Zigarette als Ausschuß. Nachteilig ist hierbei die Komplexität der Vorrichtung und die Verwendung eines kleinen Signals als Anzeige für intakte Zigaretten.

Ferner ist es aus der GB-PS 1 347 -21 bekannt, ein Bündel aus Lichtleitfasern benachbart zu dem zu prüfenden Zigarettenende anzuordnen, wobei ein Teil der Fasern als Sende- und ein zweiter Teil als Empfangsfasern dienen. Das Zigarettenende wird hierbei aus einem bestimmten Abstand stirnseitig bestrahlt und die von den Tabakfasern reflektierte Lichtmenge in ein Signal umgewandelt, das mit einem Schwellwert verglichen wird. Bei Unterschreiten dieses Schwellwertes wird die Zigarette als Ausschuß angesehen. Hierbei können jedoch bereits geringe Änderungen

0080069

des Abstandes zwischen der aus den Fasern gebildeten Sonde und dem Zigarettenende das Ergebnis verfälschen, so daß komplizierte Einrichtungen zur Kompensation dieser Abstandsschwankungen geschaffen wurden, vgl. z.B. DE-OS 26 25 oo1.

Aufgabe der Erfindung ist es, eine Vorrichtung nach dem Oberbegriff des Anspruchs 1 zu schaffen, die mit minimalem Konstruktionsaufwand auskommt und bei der Verfälschungen des Ergebnisses aufgrund schwankenden Abstandes zwischen Lichtempfänger und Zigarettenende ausgeschaltet werden.

Diese Aufgabe wird entsprechend dem kennzeichnenen Teil des Anspruchs 1 gelöst.

Hierdurch wird nicht nur die Verwendung von handelsüblichen Reflexionslichtschranken - bestehend aus einer Leuchtdiode und einem Fototransistor, die in einer Ebene nebeneinander angeordnet sind - ermöglicht; bei sich vergrößerndem Abstand zwischen der Reflexionslichtschranke und dem Zigarettenende ist auch sichergestellt, daß das vom Fototransistor erzeugte Signal nur kleiner werden kann, so daß beispielsweise abgebrochene Zigaretten nicht mehr als gut gefüllt erkannt werden können. Beim Berühren der lichtdurchlässigen Platte durch die Zigarettenenden wird das größte Signal erzeugt, das entsprechend dem Füllungsgrad schwankt, und zwar derart, daß bei guter Füllung ein großes Signal erzeugt wird, das sich bei sich verschlechternder Füllung verkleinert. Es werden daher diejenigen Zigaretten als Ausschuß erkannt, die einen vorgegebenen Schwellwert unterschreiten.

Weitere Ausgestaltungen der Erfindung sind der nachfolgenden Beschreibung und den Unteransprüchen zu entnehmen.

Die Erfindung wird nachstehend anhand des in der beigefügten Abbildung dargestellten Ausführungsbeispiels näher erläutert.

Fig. 1 zeigt im Schnitt eine Vorrichtung zum Prüfen des Füllungsgrades von Zigarettenenden.

Fig. 2 zeigt die Beleuchtungsstärke B des reflektierten Lichts von einem Zigarettenende aufgetragen gegenüber dem Stand d des Zigarettenendes von dem Lichtempfänger einer Reflexionslichtschranke.

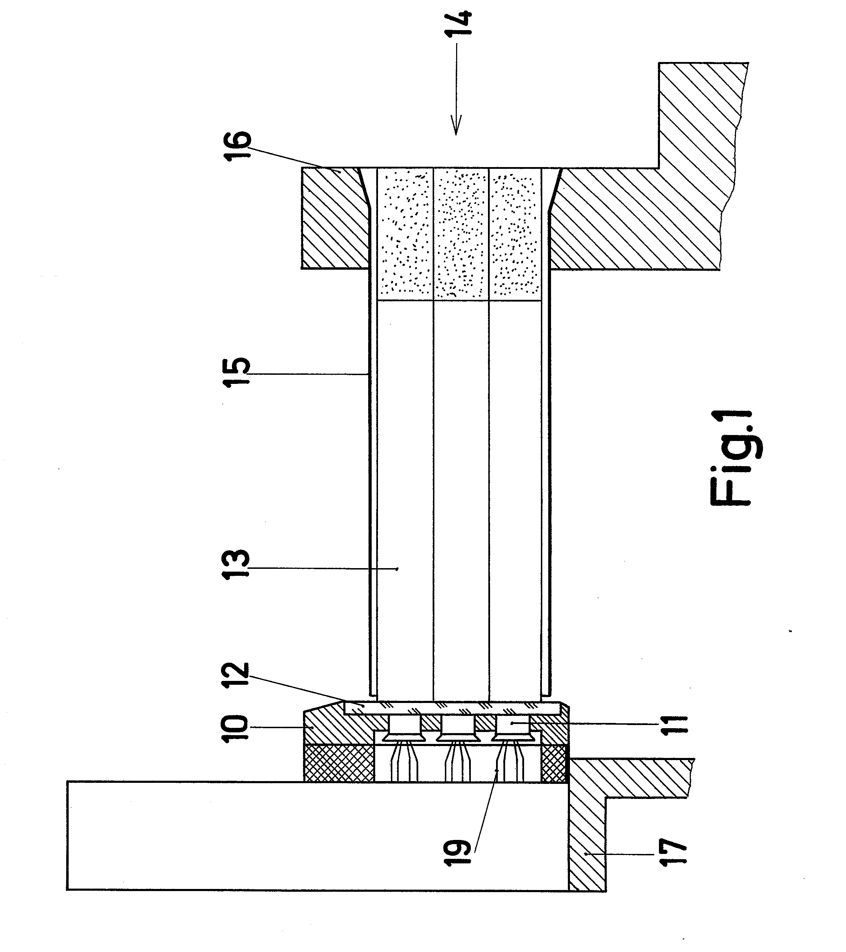

Die in Fig. 1 dargestellte Vorrichtung umfaßt eine Montageplatte 1o, die mit einer Reihe von Montageöffnungen versehen ist, in die eine entsprechende Anzahl von Reflexionslichtschranken 11 eingesetzt sind. Bei den Reflexionslichtschranken 11 handelt es sich um handelsübliche Bauteile bestehend aus einer Leuchtdiode als Lichtsender und einem Fototransistor als Lichtempfänger, die in einer Ebene nebeneinander angeordnet sind.

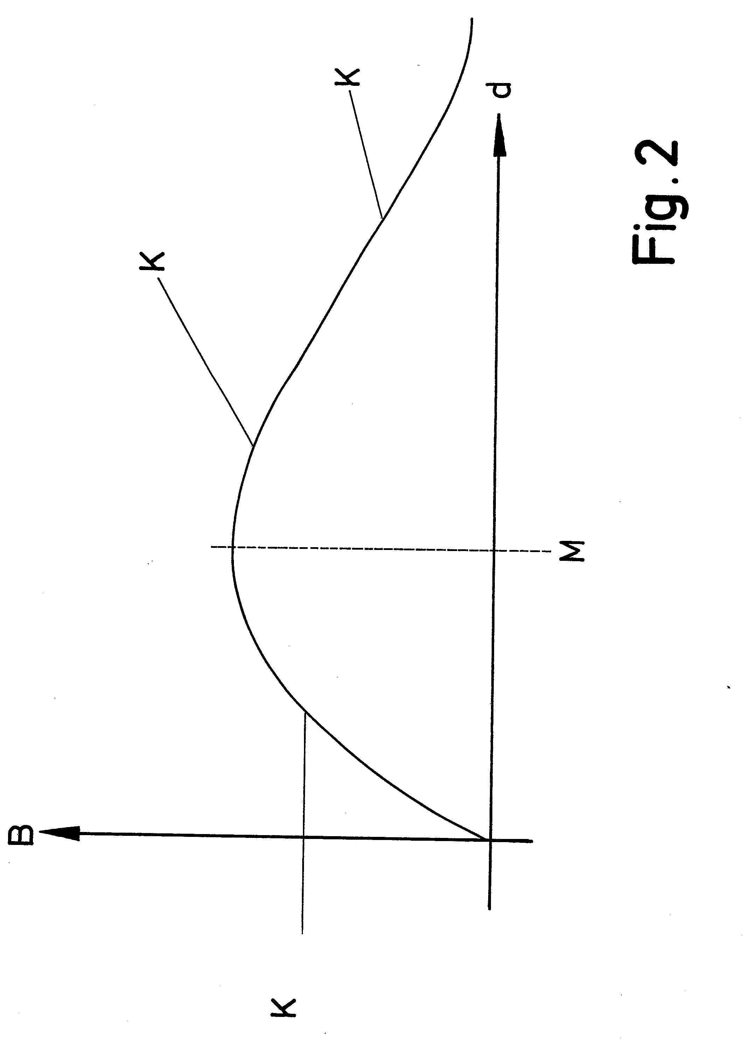

Vor der Montageplatte 1o ist eine planparallele Glasplatte 12 befestigt, die die Reflexionslichtschranken 11 nach außen abdeckt. Die Stärke und/oder der Abstand der Glasplatte 12 von den Fototransistoren der Reflexionslichtschranken 11 ist derart getroffen, daß bei Anlage der zu prüfenden Zigarettenenden von Zigaretten 13 etwa eines Zigarettenblocks 14, der sich beispielsweise in einer Zelle 15 eines Revolvers 16 befindet, der Abstand d der Zigarettenenden von den jeweiligen Fototransistoren größer als M, sh. Fig. 2, ist, d.h., daß bei Anlage der Zigarettenenden an der Glasplatte 12 in jedem Falle das größte Signal (natürlich in Abhängigkeit von Füllungsgrad des Zigarettenendes) erzeugt wird, und man sich bei größer werdendem Abstand auf dem abfallenden Ast $K_{ab}$ der Kurve K von Fig. 2 bewegt. Die Glasplatte 12 verhindert, daß man in den aufsteigenden Bereich $K_{auf}$ der Kurve K gelangt, so daß Zweideutigkeiten ausgeschaltet werden.

Bei dem dargestellten Ausführungsbeispiel ist die Vorrichtung an einem Rahmen 17 montiert, der gegenüber dem Revolver 16 feststeht. Ein Einlaufblech 18 kann vorgesehen sein, das die Zigaretten 13 in der Zelle 15 beim schrittweisen Drehen des Revolvers 16 in Anlage an die Glasplatte 12 führt. Die entsprechende Ansteuerung der Reflexionslichtschranken 11 erfolgt über eine nicht dargestellte Steuer- und Auswerteeinrichtung, die über Drähte 19 mit den Reflexionlichtschranken 11 verbunden ist.

Anstelle eines Zigarettenblocks 14 können auch Einzelzigaretten überprüft werden, die beispielsweise an der Vorrichtung entlang gefördert werden. Hierbei können auch mehrere hintereinander befindliche Zigaretten mit Hilfe mehrerer Reflexionslichtschranken 11 geprüft werden.

Die transparente Platte 12 schützt nicht nur die Reflexionslichtschranken 11 vor Verschmutzung, sondern kann auch gleichzeitig zur Selbstüberprüfung der Vorrichtung verwendet werden, indem die von der Platte 12 erzeugte Grundreflexion zwischen zwei Messungen überprüft werden kann. Anhand des dabei erzeugten Meßwertes ist ersichtlich, ob irgendwo ein Fehler in der Vorrichtung liegt, beispielsweise die Leuchtdiode der Reflexionslichtschranke 11 ausgefallen ist, oder ob eine Verschmutzung vorliegt, die beseitigt werden muß, da sie sonst dazu führen könnte, daß an sich gute Zigaretten als Ausschuß erkannt werden. Für diese Selbstüberprüfung mittels Grundreflexion muß somit der Meßwert innerhalb eines von einem unteren und einem oberen Schwellwert begrenzten Intervall liegen, um als gut erkannt zu werden, anderenfalls liegt eine Störung vor.

Damit es nicht zu einer zweifachen Grundreflexion an der Platte 12 kommt, was zu einem ungünstigen Verhältnis von Signal zu Grundreflexion führen könnte, ist die Platte 12 unmittelbar vor den Reflexionslichtschranken 11 anzuordnen. In dem Falle, daß dann die Grundreflexion doch noch zu groß ist, kann man eine Platte 12 verwenden, die auf der den Reflexionslichtschranken 11 abgewandten Seite eine diffuse Reflexion erzeugt, so daß der von der Glasoberfläche reflektierte, die Grundreflexion bildende Lichtanteil verringert wird. Die Platte 12 kann dort beispielsweise milchig sein, jedoch darf sie zur Vermeidung von Verschmutzungen keine rauhe Oberfläche aufweisen, da dort die Zigarettenenden anliegen.

0080069

Ansprüche

1.  Vorrichtung zum Prüfen des Füllungsgrades von Zigarettenenden
mit einer oder mehreren Reflexionslichtschranken (11), die jeweils
einen Lichtsender, der das zu prüfende Zigarettenende bestrahlt, und
einen Lichtempfänger, der das vom Zigarettenende reflektierte Licht
empfängt, wobei ein Signal entsprechend dem Füllungsgrad erzeugt wird,
dadurch gekennzeichnet, daß vor der oder den Reflexionslichtschranken
(11) eine lichtdurchlässige Platte (12) angeordnet ist, deren Außenseite so angeordnet ist, daß die zu prüfenden Zigarettenenden bei Anlage an der Platte (12) sich in einem Abstand im Bereich des abfallenden Teils ($K_{ab}$) der Kurve (K) der Beleuchtungsstärke des reflektierten Lichts aufgetragen gegenüber dem Abstand (d) des Zigarettenendes
von dem Lichtempfänger befindet.

2.  Vorrichtung nach Anspruch 1, dadurch gekennzeichnet, daß eine
Einrichtung (18) vorgesehen ist, um die Zigarettenenden in Anlage an
die Platte (12) zu bringen.

3.  Vorrichtung nach Anspruch 1 oder 2, dadurch gekennzeichnet, daß
die Platte (12) eine planparallele Glasplatte ist.

4.  Vorrichtung nach einem der Ansprüche 1 bis 3, dadurch gekennzeichnet, daß die Reflexionslichtschranken (11) jeweils aus einer
Leuchtdiode und einem Fototransistor bestehen.

0080069

Fig.1

Fig. 2

2/2